# EUROPEAN PATENT APPLICATION

(11) **EP 2 011 695 A2**
(43) Date of publication of application: **07.01.2009**
(21) Application number: 08158358.5
(22) Date of filing: 16.06.2008
(51) Int. Cl.: B60R 13/01

(54) **Method for producing a car boot lining element and lining element so obtained**

(30) Priority: 18.06.2007 IT PI20070075
(71) Applicant: Nusca, Roberto, 56010 Arena Metato (PI) (IT)
(72) Inventor: Nusca, Roberto, 56010 Arena Metato (PI) (IT)
(74) Representative: Celestino, Marco

(57) **Abstract**

A lining element for a car boot, and method therefor, comprising at least one plane support (11) of flexible material having a desired geometry, in particular corresponding to the shape of the car boot, a plurality of fibres (16) of artificial material connected to said support (11) in order to form a thick turf on one side thereof. The lining element for cars can provide at least one housing (17) determined on the surface of said support on the side of said fibres (16), said housing being(17) adapted to receive at least one insert (19). Below the support (11) a base layer (18) can be provided, which is also of flexible material, adapted to support from below the insert (19), or the insert may not be provided and the base layer can be see through the aperture.

## Description

### Field of the invention.

The present invention relates to a method for producing a car boot lining element and similar parts for cars.

Furthermore, the invention relates to a car boot lining element so obtained.

### Description of the prior art.

In the field of furnishing cars, car makers provide a lining, normally a moquette, that covers the inner floor surfaces and the car boot. In addition, the car makers provide carpets, used to protect the floor lining from wear and dirt.

Concerning the car boot, specific carpets are not normally provided in addition to the lining of fixed and removable boards of the car boot.

Normally, a car boot is used for containig objects and get dirty easily for the presence of gravel, chips, powder, crumbs, which fall from carried objects, such as suitcases, bags, baby carriages, shopping bags, etc.

In this case, also the minimum presence of powder, crumbs, etc., has an unaesthetic effect, owing to the presence of dark moquette, where the dirt is immediately visible.

Furthermore, the moquette of the car boot has minimum grip on the carried objects, which when the car bends slides going to hit against the side walls of the car boot.

A further aspect is that it is desirable to have in the car a removable support surface that can be used externally, for example that can be used on a lawn or other outdoor surfaces.

### Summary of the invention

It is a feature of the present invention to provide a lining element for a car boot that customizes the furnishing of the car and refines and decorates its aspect.

It is also a feature of the invention to provide a lining element for a car boot that is that can be used outdoors as support surface, for example on a lawn, a beach, etc.

It is then a feature of the invention to provide a lining element for a car boot that conceals as far as possible residues and dirt, decreasing remarkably the frequency of cleaning and/or changing it.

It is a particular feature of the invention to provide a lining element for a car boot that optimizes the grip and minimizes slipping of the transported load.

A peculiar feature of the invention to provide a lining element for a car boot that is also capable of minimizing the risk of overturning the transported load.

The present invention has also, as an object, to provide a method for making such a car boot lining element and similar accessories.

These and other objects are achieved by a lining element for a car boot, according to the invention, whose main feature is that it comprises:
- at least one plane support of flexible material having a desired geometry, in particular corresponding to the shape of the car boot,
- a plurality of fibres of artificial material connected to the support in order to form a thick turf on one side thereof, wherein said fibres have a length between 5mm and 18mm and a linear mass density set between 2000 and 15000 dtex.

In particular the lining element for cars can comprise at least one area standing out on the surface of the support on the side of the fibres. In particular, the above described area reproduces a graphical sign selected from the group comprised of:
- a text,
- an image,
- a combination thereof.

This way, it is possible to customize the lining element with said graphical sign, which can be of a colour different from the fibres of the turf.

In particular at said area a recess can be provided in which an insert is housed reproducing the graphical sign.

Alternatively, at the above described area an aperture is made and opposite to the turf a sheet is applied of colour different from that of the fibres such that it is visible through the aperture.

In another exemplary embodiment, at the above described area a recess is provided that reproduces in negative the graphical sign, in order to be visible by contrast and/or absence of fibres, and/or by fibres shorter with respect to the turf.

In a further exemplary embodiment, at the above described area the fibres can have a different colour with respect to the fibres of other areas of the turf.

Advantageously, the artificial material of the fibres is fibrillated yarn, in particular polypropylene and/or polyethylene, with linear mass density set between 2000 and 11500 dtex.

Alternatively, the artificial material of the fibres is monofilament monotape yarn, or monofilament monoextruded yarn, with linear mass density set between 6000 to 15000 dtex.

Advantageously, the lining element for a car boot occurs stitching U-shaped fibres on the plane support. In particular the stitching step provided number of stitched points for square meter set between 15000 and 70000, preferably between 20000 to 50000.

In particular the fibres are connected to the plane support in a way selected from the group comprised of: volcanized latex spreading and/or polyurethane spreading, or hot-processing.

Advantageously, furthermore, a resilient sheet is provided of soft material connected to the plane support opposite to the turf.

In particular the fibres of artificial material can be arranged on said plane support at a distance, from one another, set between 0.1 cm and 3.0 cm, advantageously between 0.5 cm and 2.5 cm, preferably between 0.7 and 2.0 cm.

Furthermore, the height of the fibres starting from the plane support is preferably set between 6 and 15 mm.

In particular the fibres can be selected from the group comprised of:
- single fibres,
- bundles of twisted fibres, in order to stitch multiple fibres in a single point having a plurality of fibres at one end.

According to another aspect of the invention, a method for making lining elements for a car boot provides the following steps:
- arranging a support of flexible material;
- modelling said support according to a desired shape;
- fixing a plurality of fibres of artificial material to said support in order to form a thick turf on one side of said support, wherein said fibres have a length between 5mm and 18mm and a linear mass density set between 2000 and 15000 dtex.

In particular the fibres can be obtained by weaving, with a pitch among the needles set between 3/16 of thumb and 3/8 of thumb(4,5 mm and 9,5 mm).

In particular the needles stitch the fibres in a number of strokes set between 16 and 37 for each linear meter.

Advantageously, the step of modelling the support is carried out by a technology of water cutting. Water cutting provides in summary the pressurization at high pressure of a water jet in a tool following a predetermined path according to a specific program. The pressurization of the water is carried out through amplification by pressure intensification pumps up to about 4150 bar. This technique allows to obtain a high production rate and therefore represents the kind of cut more appropriate for a continuous production process.

### Brief description of the drawings

Further characteristic and the advantages of the lining element for a car boot, according to the invention, and of the relative production method, will be made clearer with the following description of an exemplary embodiment thereof, exemplifying but not limitative, with reference to the attached drawings, wherein:
- Fig. 1 shows a diagrammatical top plan view of a car boot in which a coating according to the invention is arranged;
- Fig. 2 shows diagrammatically a cross sectional view of a portion of a lining element for a car boot, according to the invention, consisting of a plurality of stitched fibres on a support;
- Figs. 3 shows a perspective view of a lining element for a car boot according to the invention where the fibres are not shown;
- Fig. 4 shows an exemplary embodiment of the coating of Fig. 2 with an aperture;
- Fig. 5 shows an exploded cross sectional view of a further exemplary embodiment of the invention;
- Fig. 6 shows a perspective view of a lining element according to the invention in an assembled configuration before the application of an insert with a graphical sign;
- Fig. 7 shows a car boot with a lining element according to the invention therein;
- Fig. 8 shows the step of stitching fibres on a flexible support mat;
- Fig. 9 shows a water cutting step.

### Detailed description of some exemplary embodiments

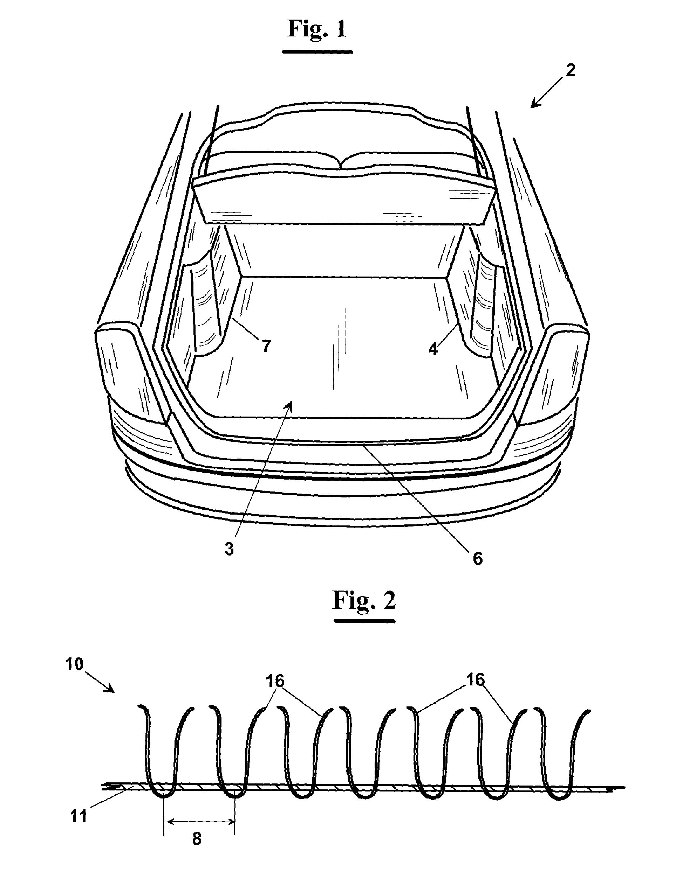

As shown in Fig. 1, a car boot 3 has a geometry that comprises in general an alternation of curvilinear and rectilinear portions. In general, at the rear wheels of the car recessed curvilinear portions 4 and 7 are provided, as well as other curvilinear portions 6.

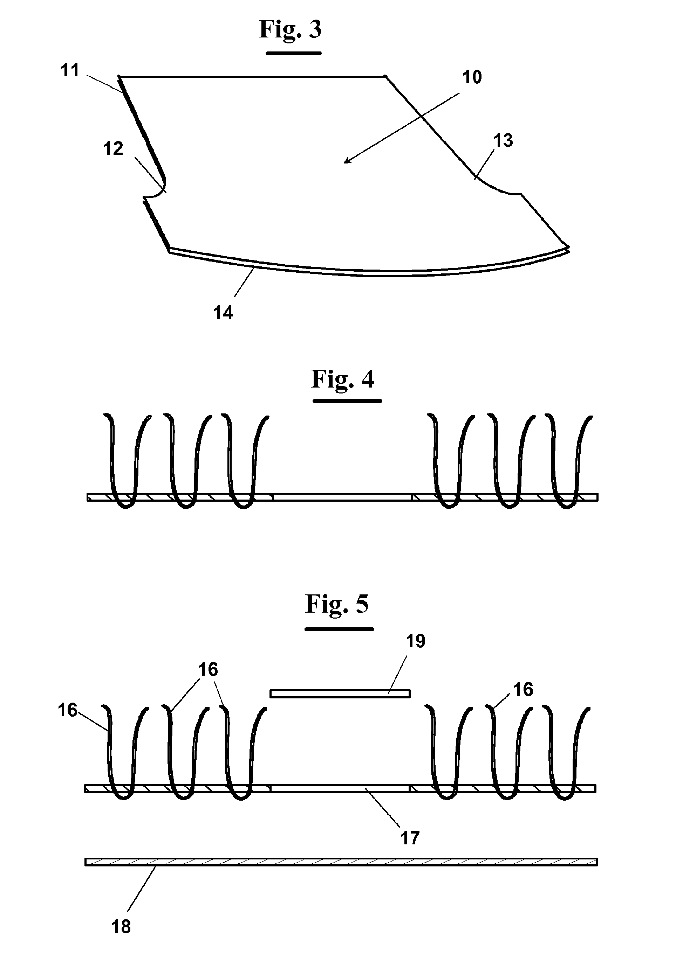

In Fig. 2 a portion is shown of lining element for a car boot, according to the present invention, adapted to overcome the above described drawbacks. It comprises, in particular a flexible support 11, for example of plastic material and from which a plurality of stitched fibres 16 protrude located at a distance 8 from one another. The coating, as shown in Fig. 3 is suitably shaped following the geometry of the car boot. To this end, edges 12, 13 and 14 are provided having curvilinear geometry, for example in order to fit to the side walls of the car boot at the rear wheels 4 and 7 of the car and to the rounded car boot outline at the rear of the vehicle.

The exemplary embodiment above described for flexible support 11 is exemplifying but not limitative. A contour of car boot lining according to the invention can be designed for each type of car.

The fibres 16 are stitched onto support 11 so that they protrude upwards from support 11 creating a thick turf, in order to have an aesthetic effect similar to that of a artificial lawn. This way, owing to the friction coefficient of the fibres, the transported load is much more stable. The fibres also have the function of concealing dirt and residues that may be present in the car boot.

In particular the fibres can be made of fibrillated yarn, in particular polypropylene and/or polyethylene, with linear mass density set between 2000 and 11500 dtex. Alternatively, the fibres can be made of monofilament monotape yarn, or monofilament monoextruded yarn. In this case the linear mass density is set between 6000 to 15000 dtex.

The fibres can be obtained by weaving, with a pitch among the needles set between 3/16 of thumb and 3/8 of thumb (4,5 mm and 9,5 mm).

In particular the needles stitch the fibres from 16 to 37 strokes for each linear meter. For example, an average number of stitched points of the fibres can be 45000points/mq.

Furthermore, the height of the fibres starting from the support is preferably set between 6 and 15 mm.

With reference to Fig. 4, support 11 has at least one aperture 17, for example of a through hole, having a desired shape, in order to form with its contour a graphical sign. In particular aperture 17 is adapted to receive an insert 19 having corresponding shape and on which can be reproduced graphical signs such as words, marks, symbols, images and what other desirable for customizing the lining element, or for advertisement purposes.

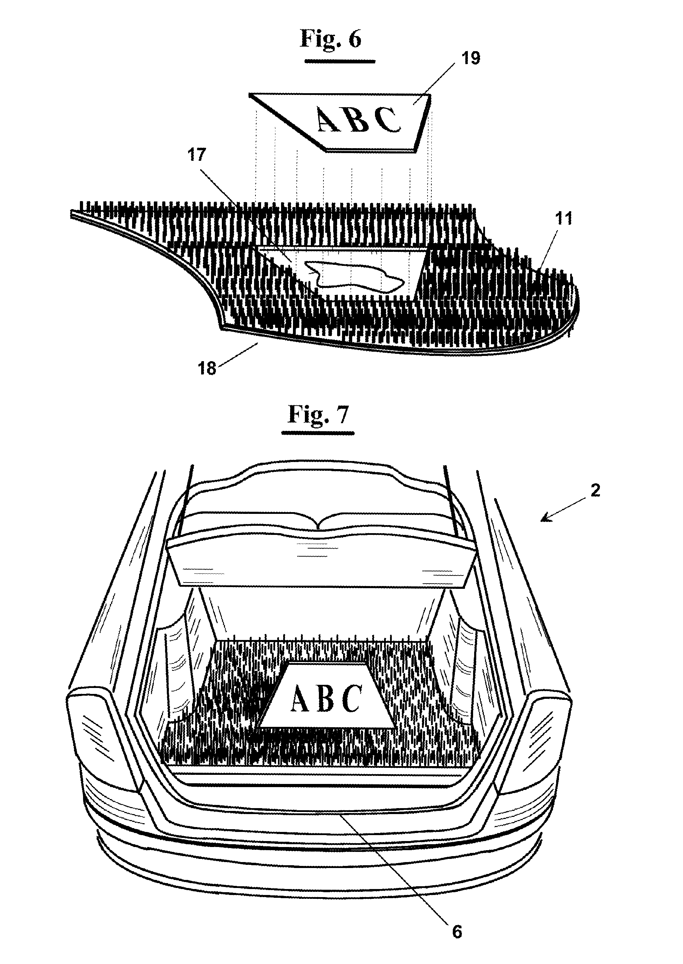

In this case, below first layer 11 a base layer 18 can be provided, which is also of flexible material, adapted to support from below insert 19 (Figs. 5 and 6).

Also in this embodiment, the lining fits the car boot and can, with its surface turf-like surface, giving a gentle aspect, for example coloured in green like a lawn.

In this case, insert 19 can be used for providing a desired advertising message, or an ornamental effect, depicting famous designs, characters or signs.

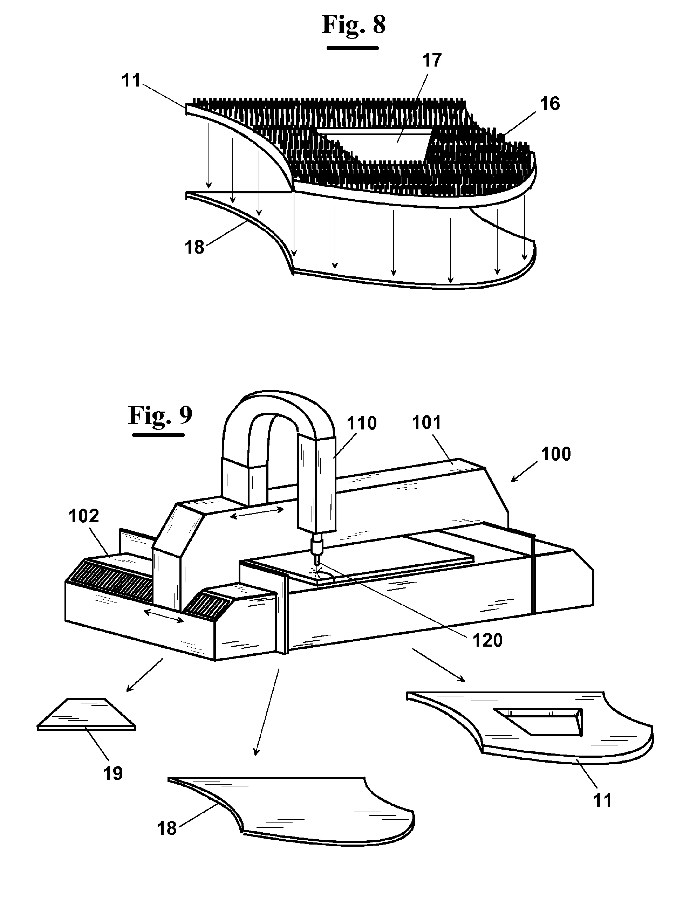

With reference to Fig. 9, to obtain elements 11, 18 or 19 above described, it is possible to use a water cutting step, starting from sheet meterial, pane or unwound from a roll.

In particular a cutting head 120 integral to an arm 110 can move along guide 101 and 102 of a machine 100, cutting elements 11, 18 and 19, which are coupled together as shown in Figs. 6 and 8.

The lining element for a car boot is particularly adapted to achieve above defined objects. With the same methodology also other types of lining elements can be made, for example car carpets.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A lining element for comprising:
- at least one plane support of flexible material having a desired geometry, in particular corresponding to the shape of said car boot;
- a plurality of fibres of artificial material connected to said support in order to form a thick turf on one side thereof, wherein said fibres have a length between 5mm and 18mm and a linear mass density set between 2000 and 15000 dtex.

2. A lining element, according to claim 1, comprising at least one area standing out on the surface of said support on the side of said fibres, wherein said area reproduces a graphical sign selected from the group comprised of:
- a text,
- an image,
- a combination thereof.

3. A lining element, according to claim 2, wherein said area reproduces a graphical sign in a way selected from the group comprised of:
- a housing in said area and in which an insert is housed reproducing said graphical sign;
- a through hole in said area, wherein opposite to a turf side a sheet is applied of colour different from said fibres that is visible through said hole;
- a recess that reproduces in negative said graphical sign, in order to be visible by contrast and/or absence of fibres, and/or by fibres shorter with respect to said turf;
- a different colour of the fibres of said area with respect to the fibres of other areas of the turf.

4. A lining element, according to claim 1, wherein the artificial material of said fibres is selected from the group comprised of: fibrillated yarn, in particular polypropylene and/or polyethylene, with linear mass density set between 2000 and 11500 dtex, or monofilament monotape yarn or monofilament monoextruded yarn, with linear mass density set between 6000 to 15000 dtex.

5. A lining element, according to claim 1, wherein fibres in the shape of U-filaments are stitched to on said plane support with a numer of stitches per square meter set between 15000 and 70000, preferably between 20000 to 50000.

6. A lining element, according to claim 1, wherein said fibres are connected to said plane support in a way selected from the group comprised of: volcanized latex spreading, polyurethane spreading, hot-processing, a combination thereof.

7. A lining element, according to claim 1, wherein a resilient sheet is provided of soft material connected to said plane support opposite to the turf.

8. A lining element, according to claim 1, wherein said fibres of artificial material are arranged on said support at a distance, from one another, set between 0.1 cm and 3.0 cm, in particular between 0.5 cm and 2.5 cm, preferably between 0.7 and 2.0 cm.

9. A lining element, according to claim 1, wherein said fibres starting from said support are high between 6 and 15 mm.

10. A lining element, according to claim 1, wherein said fibres are selected from the group comprised of:
- single fibres
- bundles of twisted fibres, with a single stictching point ant at an end a plurality of fibre terminals.

11. A method for making lining elements for a car boot, comprising the following steps:
- providing a support of flexible material;
- modelling said support according to a desired shape;
- fixing a plurality of fibres of artificial material to said support in order to form a thick turf on one side of said support, wherein said fibres have a length between 5mm and 18mm and a linear mass density set between 2000 and 15000 dtex.

12. Method, according to claim 11, wherein said fibres are stitched to the support, with a pitch among stitching needles set between 3/16 of inch and 3/8 of inch (4,5 mm and 9,5 mm).

13. Method, according to claim 11, wherein said support is modelled by water cutting.

14. A method, according to claim 12, wherein said needles stitch said fibres from 16 to 37 strokes for each linear meter.
